# EUROPÄISCHE PATENTSCHRIFT

(11) **EP 1 743 786 B1**
(45) Veröffentlichungstag und Bekanntmachung des Hinweises auf die Patenterteilung: **05.05.2010**
(21) Anmeldenummer: 06012367.6
(22) Anmeldetag: 16.06.2006
(51) Int. Cl.: B66F 9/075, B60G 17/056

(54) **Hydropneumatisch gefederte Radaufhängung**
Hydropneumatic suspension
Suspension hydropneumatique

(30) Priorität: 11.07.2005 DE 102005032263
(43) Veröffentlichungstag der Anmeldung: 17.01.2007
(73) Patentinhaber: Jungheinrich Aktiengesellschaft, 22047 Hamburg (DE)
(72) Erfinder: Schröder, Henrik, Dipl.-Ing., 21423 Winsen-Roydorf (DE)
(74) Vertreter: Hauck Patent- und Rechtsanwälte

(56) Entgegenhaltungen:
- EP-A- 0 552 848
- EP-A- 1 162 092
- EP-B1- 0 150 830
- DE-A1- 1 580 793
- DE-A1- 19 604 226
- DE-B- 1 051 196
- DE-C- 919 517
- DE-C2- 19 753 412
- GB-A- 1 223 280
- US-A- 3 068 023
- US-A- 4 340 235

## Beschreibung

Die Erfindung bezieht sich auf ein Vier-Rad-Fahrwerk für ein Flurförderzeug, vorzugsweise einen Gegengewichtsstapler nach dem Oberbegriff des Patentanspruchs 1.

Vierrädrige Flurförderzeuge, zum Beispiel Gegengewichtsstapler, haben herkömmlich zwei nicht gefederte Achsen, um eine gute Standsicherheit zu gewährleisten. Eine Federwirkung wird meistens nur über die Reifen erzielt, wodurch der Fahrkomfort und das Fahrverhalten mäßig sind, weil das Fahrzeug zum Springen neigt.

Aus EP 1 162 092 A2 ist bekannt, die Hinterachse eines Gegengewichtsstaplers federnd aufzuhängen. Aus DE 1 580 793 ist für Geländefahrzeuge, Spezialfahrzeuge zum Transportieren schwerer und sperriger Lasten bekannt geworden, sowohl die Vorder- als auch die Hinterachse des Fahrzeuges bzw. die zugehörigen Räder über doppelt wirkende Hydraulikzylinder abzustützen, die ihrerseits mit Hydrospeichern zusammenwirken. Es ist in dem Zusammenhang ferner bekannt geworden, die Zylinderräume der Hydraulikzylinder über Kreuz zu koppeln und im Bedarfsfall willkürlich die Verbindung zu den Hydrospeichern zu sperren. Wegen der schnell wechselnden Achslasten und der deswegen zu fordernden Kippstabilität läßt sich die bekannte Anordnung nicht ohne weiteres auf Flurförderzeuge übertragen.

Aus DE 1 051 196 A1 ist für ein Flurförderzeug bekannt geworden, mit Hilfe von Hydraulikzylindern den Rahmen um die Vorderachse zu verschwenken, um auf diese Weise ein Hubgerüst, an dem eine Lastgabel höhenverstellbar geführt ist, um einen vorgehenden Betrag zu neigen.

Der Erfindung liegt die Aufgabe zugrunde, ein Vier-Rad-Fahrwerk für ein Flurförderzeug, insbesondere einen Gegengewichtsstapler, zu schaffen, bei dem ein hoher Federungskomfort an allen Rädern möglich ist, ohne dass die Standsicherheit bei gehobener Last eingeschränkt ist. Außerdem sollen beim Aufnehmen und Absetzen einer Last Nickbewegungen des Fahrzeugaufbaus weitgehend vermieden werden.

Diese Aufgabe wird durch die Merkmale des Patentanspruchs 1 gelöst.

Bei dem erfindungsgemäßen Fahrwerk werden die Achsen bzw. die Räder über doppelt wirkende Hydraulikzylinder abgestützt, welche mit Hydrospeichern zusammenwirken, um im Fahrbetrieb Federungskomfort bereitzustellen. Die Achslasten eines Flurförderzeugs unterliegen im Betrieb naturgemäß großen Schwankungen. Beim Aufnehmen und Absetzen einer Last soll die Federbewegung möglichst gering sein, daher ist bei der Erfindung das hydraulische System für die Hubvorrichtung über einen Druckübersetzer mit dem hydraulischen Fahrwerkssystem gekoppelt, wodurch der Druck im Fahrwerkssystem und damit die Einfederbewegung der Achsen bzw. der Räder in Abhängigkeit von der aufgenommenen Last verändert wird.

Die Hubbewegungen am Hubgerüst werden üblicherweise von einer hydraulischen Hubvorrichtung gesteuert. Beim Aufnehmen einer Last kommt es naturgemäß zu einem deutlichen Druckanstieg, wenn das Lasttragmittel die Last anhebt. Durch das Anheben der Last erhöht sich gleichzeitig die Last der lastnahen Achse, so dass eine Einfederbewegung zu erwarten ist. Bei der Erfindung wird diese Erscheinung ausgeglichen, da bei einem Druckanstieg in der Hubvorrichtung dieser an das Fahrwerkssystem weitergegeben wird, so dass eine Einfederbewegung weitgehend vermieden wird.

Bei der Aufnahme einer Last wird bei einem Flurförderzeug naturgemäß die lastferne Achse entlastet. Es ist daher gemäß einer Ausgestaltung der Erfindung vorteilhaft, wenn das hydraulische System für die Federung der lastnahen Achse mit den Ringräumen der Hydraulikzylinder für die lastferne Achse verbunden ist. Um lastwechselbedingte Federbewegungen der lastfernen Achse zu vermeiden ist es ferner vorteilhaft, wenn die mechanischen Größen und geometrischen Bedingungen der lastnahen und der lastfernen Achse so aufeinander abgestimmt sind, dass der durch die Lastaufnahme bedingte Druckanstieg im Federungssystem die Entlastung der Hinterachse ausgleicht.

Nach einer Ausgestaltung der Erfindung ist der Druckübersetzer über ein Schaltventil mit den Zylinderräumen der Hydraulikzylinder mindestens einer Achse, vorzugsweise der lastnahen Achse, verbunden, und der zugehörige Hydrospeicher ist an die Verbindung zwischen dem Schaltventil und dem Druckübersetzer angeschlossen. Bei Lastaufnahme kann das Schaltventil gesperrt werden, so dass Federbewegungen blockiert sind. Über den Druckübersetzer wird der Druck in dem Hydrospeicher bei Aufnahme einer Last erhöht, so dass bei einer späteren Freigabe der Federbewegung Druckstöße durch Öffnen des Schaltventils minimiert werden.

Nach einer weiteren Ausgestaltung der Erfindung ist zwischen Druckübersetzer und dem Schaltventil eine Drossel angeordnet. Diese dämpft bei Fahrt des Flurförderzeugs über Bodenunebenheiten eine Schwingung zwischen dem Fahrwerkskreislauf und dem Kreislauf für die Hubvorrichtung. Eine Dämpfung kann auch durch eine mechanische Reibung erfolgen. Es ist schließlich auch denkbar, eine Drossel in dem hubgerüstseitigen Zweig des Druckübersetzers anzuordnen.

In vorteilhafter Weise ist der Druckübersetzer über zwei Zweige mit zwei parallelen Zweigen des hydraulischen Fahrwerkssystems verbunden, und die Zweige des Druckübersetzers weisen eine Zwangskopplung auf dergestalt, dass ein Druckausgleich über den oder die Hydrospeicher vermieden ist. Weisen die beiden Zweige des Druckübersetzers beispielsweise Kolben auf, können diese mechanisch miteinander verbunden sein. Auf diese Weise wird eine Wankbewegung des Flurförderzeugs wirkungsvoll vermieden, denn ein Druckausgleich zwischen den hydraulischen Zweigen findet nicht statt. Es sind auch andere Bauformen eines Druckübersetzers denkbar, zum Beispiel eine hubgerüstseitige Druckmittelkammer, die auf zwei voneinander getrennte Druckmittelkammern fahrwerksseitig wirkt.

Nach einer weiteren Ausgestaltung der Erfindung sind die Hydrospeicher über eine Parallelschaltung aus einem Rückschlagventil und einer steuerbaren Drossel mit den hydraulischen Fahrwerkssystem verbunden. Dadurch wird ein schnelles Einfedern der betreffenden Achsen ermöglicht, während beim Ausfedern durch die Drossel ein Energieverlust verursacht wird, so dass Schwingungen gedämpft werden. Die Drosseln sind einstellbar, so dass die Dämpfung an die Anforderung des Fahrzeugs angepaßt werden kann. Nach einer weiteren Ausgestaltung der Erfindung kann eine Verstellung der Drossel in Abhängigkeit von Betriebs- bzw. Fahrparametern erfolgen, beispielsweise in Abhängigkeit von der Fahrgeschwindigkeit, der Fahrbahnbeschaffenheit, der aufgenommenen Last usw.. Dadurch lassen sich die Dämpfungseigenschaften des Federungssystems an die Umgebungsbedingungen anpassen.

Nach einer Ausgestaltung der Erfindung ist das hydraulische Fahrwerkssystem in der Weise beschaffen, dass die Zylinderräume der Hydraulikzylinder der lastnahen Achse kreuzweise miteinander verbunden sind und die Kolbenräume der Hydraulikzylinder der lastnahen Achse mit den Ringräumen der Hydraulikzylinder der lastfernen Achse verbunden sind. Durch diese Anordnung werden Nickschwingungen des Fahrzeugs vermindert, da sich beim Einfedern der lastnahen Achse der Druck in den Ringräumen der Hydraulikzylinder der lastfernen Achse erhöht und so einem Ausfedern der lastfernen Achse entgegenwirkt. Zusätzlich wird die Wankstabilisierung der lastnahen Achse verstärkt, da bei einem einseitigen Einfedern der lastnahen Achse der Druck im Ringraum des gegenüberliegenden Hydraulikzylinders der lastfernen Achse erhöht wird und so einem Ausfedern des diagonal gegenüberliegenden Rades entgegenwirkt. Die Kolbenräume der Hydraulikzylinder der lastfernen Achse sind nach einer Ausgestaltung der Erfindung permanent miteinander verbunden, um Pendelbewegungen der lastfernen Achse zum Ausgleich von Fahrbahnunebenheiten zu ermöglichen.

Nach einer weiteren Ausgestaltung der Erfindung kann eine Druckmeßvorrichtung vorgesehen werden, die an mindestens einer Stelle des hydraulischen Fahrwerkssystems den Druck mißt zur Bestimmung der Rad- oder Achslast an einer oder beiden Achsen. Auf der Basis dieser Messung kann der Fahrer bei Kippgefahr des Fahrzeugs gewarnt oder es können automatische Maßnahmen gegen das Umkippen des Flurförderzeugs ergriffen werden.

Nach einer weiteren Ausgestaltung der Erfindung kann den Achsen bzw. den Rädern eine Sensorik zugeordnet werden, welche die Höhe des Rahmens des Fahrzeugs relativ zum Untergrund bestimmt und die mit einer Steuervorrichtung verbunden ist, welche einen Antrieb für eine Hydraulikpumpe und eine zugehörige Ventilanordnung ansteuert, bis die gewünschte Höhe an einer oder beiden Achsen erreicht ist. Dadurch kann mit Hilfe einer Pumpe der Aufbau bzw. der Rahmen des Fahrzeugs mit Hilfe der Hydraulikzylinder auf ein bestimmtes Niveau angehoben werden, bei dem eine Einfederung möglich ist. Ein Stromteilerventil kann sicherstellen, dass eine gleichmäßige Druckmittelzufuhr zu den Hydraulikzylindern erfolgt. Mit Hilfe der beschriebenen Anordnung ist auch möglich, durch separate Druckmittelzufuhr zu dem Hydraulikzylindern etwa der lastfernen Achse das Fahrzeug um eine Querachse zu neigen. Dadurch erfolgt auch eine Neigung des Hubgerüstes. Das Hubgerüst kann daher fest mit dem Fahrzeug verbunden werden, und eine separate Neigevorrichtung für das Hubgerüst entfällt.

Wie schon erwähnt, ist während der Aufnahme bzw. des Absetzens einer Last eine Einfederung nach Möglichkeit zu vermeiden. Daher sieht eine Ausgestaltung der Erfindung vor, dass die Schaltventile, über welche die Hydrospeicher mit den Hydraulikzylindern verbunden sind, in Abhängigkeit von Betriebsparametern des Flurförderzeugs automatisch angesteuert werden, wie der Fahrgeschwindigkeit, der Hubhöhe des Lasttragmittels usw.. Wird zum Beispiel eine Last in relativ großer Höhe transportiert, ist es angeraten, die Schaltventile zu schließen, wenn die reduzierte Einfederungswirkung aufgrund der Verbindung mit dem Hubsystem nicht ausreicht, eine zufriedenstellende Stabilität zu gewährleisten.

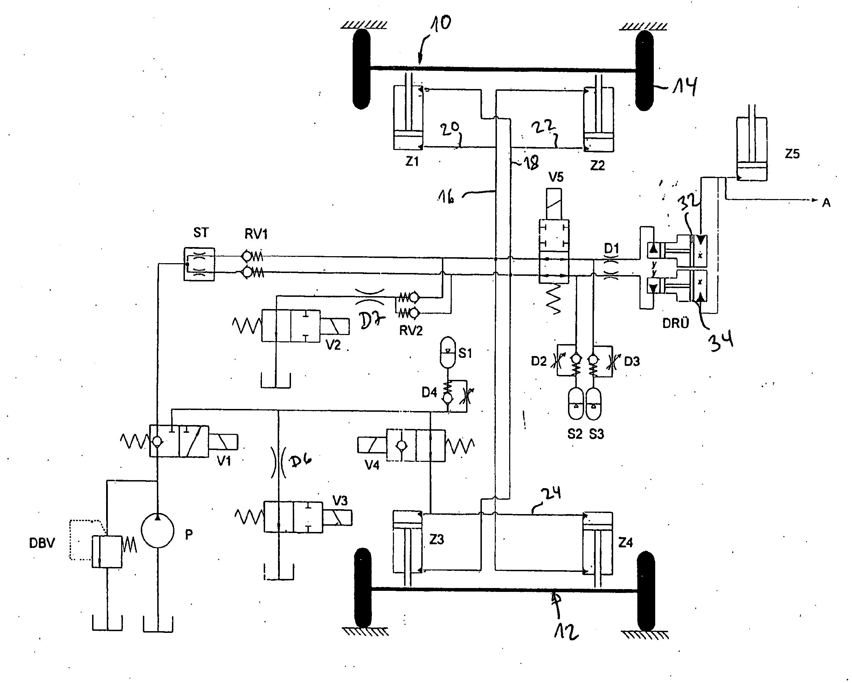

Die Erfindung wird nachfolgend anhand eines Ausführungsbeispiels näher erläutert.
Die einzige Figur zeigt einen Hydraulikschaltplan für ein Vier-Rad-Fahrwerk nach der Erfindung.

In der Figur sind zwei Achsen 10, 12 zu erkennen, die jeweils an den Enden ein Rad 14 lagern. 10 ist im Beispiel die Vorderachse eines Gegengewichtsstaplers und 12 dementsprechend die Hinterachse. Üblicherweise werden in diesem Fall die Vorderräder 14 angetrieben und die Hinterachse 12 ist pendelnd aufgehängt. Die Vorderachse 10 ist mit Hilfe von zwei doppelt wirkenden Hydraulikzylindern Z1 und Z2 am nicht gezeigten Rahmen des Flurförderzeugs abgestützt. Die Hinterachse 12 ist mittels doppelt wirkender Hydraulikzylinder Z3 und Z4 am Rahmen abgestützt. Die Ringräume der Hydraulikzylinder Z 1 und Z2 sind kreuzweise mit den Ringräumen der Hydraulikzylinder Z3 und Z4 verbunden, und zwar über Leitungen 16 bzw. 18. Die Kolbenräume der Hydraulikzylinder Z1, Z2 sind über Leitungen 20 bzw. 22 mit den Leitungen 16 bzw. 18 verbunden. Die Kolbenräume der Hydraulikzylinder Z3 und Z4 sind über eine Leitung 24 miteinander verbunden.

Eine Hydraulikpumpe P ist über ein Schaltventil V1, das in einem Pfad ein Rückschlagventil aufweist, mit einem Strömungsteiler ST verbunden. Der Strömungsteiler ist über eine Rückschlagventilanordnung RV1 mit den Leitungen 16, 18 verbunden. An die Leitung zwischen Pumpe P und Ventil RV1 ist ein Druckbegrenzungsventil DBV angeschlossen, das mit dem Tank des Hydrauliksystems verbunden ist.

Bei Z5 ist ein Hubzylinder eines nicht weiter dargestellten Hubgerüstes für den Gegengewichtsstapler angedeutet. Der Hubzylinder Z5 ist über einen Anschluß A mit einer gesteuerten Druckmittelquelle (nicht gezeigt) für den Druckzylinder Z5 verbunden. Der Kolbenraum des Hubzylinders Z5 ist ferner mit zwei Eingängen eines hydraulischen Druckübersetzers 30 verbunden, der zwei parallel angeordnete Doppelkolben 32, 34 aufweist. Die Ausgänge des Druckübersetzers DRÜ sind über Drosseln D1 mit einem Schaltventil V5 verbunden, das im durchgeschalteten Zustand die Ausgänge des Druckübersetzers DRÜ mit Leitungen 16, 18 verbindet.

An die Leitungen zwischen dem Druckübersetzer DRÜ und dem Ventil V5 sind jeweils Hydrospeicher S2, S3 angeschlossen und zwar über eine Parallelschaltung aus einer verstellbaren Drossel D2, D3 und einem Rückschlagventil.

Die Leitung 24 ist über ein steuerbares Schaltventil V4, in dessen einem Pfad ein Rückschlagventil angeordnet ist, mit einem weiteren Hydrospeicher S1 über eine Parallelschaltung aus steuerbarer Drossel D4 und Rückschlagventil verbunden. Ein Ausgang des Schaltventils V1 ist mit der Verbindung zwischen dem Schaltventil V4 und dem Hydrospeicher S 1 verbunden. An diese Leitung ist ferner über eine Drossel D6 ein Schaltventil V3 angeschlossen, das bei Durchschaltung mit dem Tank des Hydrauliksystems verbindet. Ein weiteres Ventil V2 ist über eine Drossel D7 und ein Rückschlagventil RV2 enthaltende Leitungen mit den Verbindungsleitungen zwischen dem Stromteiler ST und dem Ventil V5 verbunden. Bei Durchschaltung verbindet das Ventil V2 mit dem Tank des Hydrauliksystems.

Nachfolgend soll die Wirkungsweise des Hydrauliksystems nach der Figur näher erläutert werden.

In drucklosem Zustand der Hydraulikzylinder Z1 bis Z4 sind die Kolbenstangen aufgrund des Fahrzeugeigengewichts vollständig eingefahren. Um eine Federbewegung zu ermöglichen wird mit Hilfe der Pumpe P Druckmittel eingespeist bis die Zylinder Z 1 bis Z4 eine mittlere Position erreichen. Das Anheben von Vorderachse 10 und Hinterachse 12 erfolgt getrennt. Zunächst wird die Hinterachse um einen gewissen Betrag angehoben, indem über das Schaltventil V 1 und das Schaltventil V4 Druckmittel in die Kolbenräume der Zylinder Z3 und Z4 eingespeist wird, wobei Schaltventil V3 geschlossen ist. Anschließend erfolgt über das Schaltventil V1 und den Strömungsteiler ST eine Einspeisung von Druckmittel über die Leitungen 16, 18 in die Zylinder Z 1 und Z2 der Vorderachse 10. Das in den Ringräumen verdrängte Volumen der Zylinder Z1, Z2 fließt in den Kolbenraum der jeweils gegenüberliegenden Zylinder Z2 bzw. Z1 sowie in die Ringräume der Zylinder Z3 und Z4, wodurch die Kolbenstangen wieder eingefahren werden, wobei das Druckmittel aus den Kolbenräumen über Ventil V3 entweicht. Anschließend erfolgt dann ein erneutes Einspeisen von Druckmittel in die Kolbenräume der Zylinder Z3 und Z4, bis der Rahmen des Flurförderzeugs auf dem gewünschten Niveau ist. Zu diesem Zweck kann eine Sensorik vorgesehen werden, die mit einem nicht gezeigten elektrischen Steuergerät verbunden ist, das die Pumpe P sowie das Ventil V1 und V2 und die Ventile V3 und V4 entsprechend ansteuert. Das Stromteilventil ST stellt sicher, dass die Zylinder Z1, Z2 der Vorderachse 10 gleichmäßig ausfahren, so dass der Fahrzeugrahmen zur Vorderachse 10 parallel ausgerichtet ist. Bei Nichtbenutzung des Fahrzeugs wird das System über die Ventile V2 und V3 drucklos geschaltet. Sie ermöglichen den Abfluß des Druckmittels zum Tank. Eine Absicherung gegen Überdruck beim Befüllen des Systems erfolgt mit Hilfe des Druckbegrenzungsventils DBV.

Durch die kreuzweise Verschaltung der doppelt wirkenden Zylinder Z1 und Z2 sowie der Kolbenräume der Zylinder Z1, Z2 mit den Ringräumen der hinteren Zylinder Z3, Z4 wird eine Nickschwingung des Fahrzeugs vermindert, da sich beim Einfedern der Vorderachse 10 der Druck in den Ringräumen der hinteren Zylinder Z3 und Z4 erhöht und so einem Ausfedern der Hinterachse 12 entgegenwirkt. Die vorhandene Wankstabilisierung der Vorderachse 10 wird dadurch verstärkt, dass bei einem einseitigen Einfedern der Vorderachse 10 der Druck im Ringraum des gegenüberliegenden Hinterachszylinders Z3 bzw. Z4 erhöht wird und so einem Ausfedern des diagonal gegenüberliegenden Hinterrades entgegenwirkt.

Die Kolbenräume der Hinterachszylinder Z3 und Z4 sind permanent miteinander verbunden, um eine Pendelbewegung der Hinterachse 12 zum Ausgleich von Fahrbahnunebenheiten zu ermöglichen.

Federbewegungen des beschriebenen hydraulischen Systems werden durch die Gasfüllungen der Hydrospeicher S1 bis S3 ermöglicht. Um eine Dämpfung der Federbewegungen zu erreichen, ist jedem Hydrospeicher S 1 bis S3 die Drossel-Rückschlagventilkombination D1 bis D4 zugeordnet, die ein schnelles Einfedern der betreffenden Achse ermöglicht, beim Ausfedern jedoch durch die Drossel einen Energieverlust hervorruft, so dass Schwingungen gedämpft werden. Der Drosselquerschnitt kann an die Anforderung des Fahrzeugs angepaßt werden. Es kann auch eine automatische Abhängigkeit von Betriebsparametern vorgesehen werden, wie etwa der Fahrgeschwindigkeit, der Fahrbahnbeschaffenheit, der aufgenommenen Last usw..

Um zum Beispiel die Stabilität des Staplers beim Einstapeln einer Last in großer Höhe zu erhöhen, wird das Fahrwerk auf eine sehr hohe Federsteifigkeit umgeschaltet. Zu diesem Zweck werden die Ventile V4 und V5 von der nicht gezeigten Elektronik angesteuert. Federbewegungen, die zu einem Umkippen des Fahrzeugs führen können, werden dadurch blockiert. Es ist vorteilhaft, wenn die Ventile V4 und V5 abhängig vom Betriebszustand des Flurförderzeugs automatisch von der Steuerungselektronik angesteuert werden, wozu die Signale von Sensoren zur Messung der Fahrgeschwindigkeit, Hubhöhe und dergleichen verwendet werden können.

Die Achslasten eines Flurförderzeugs unterliegen im Betrieb naturgemäß einer großen Schwankungsbreite. Daher ist die Verbindung des hydraulischen Fahrwerkssystems mit dem Hubzylinder Z5 vorgesehen. Die Hubbewegungen des Hubgerüsts werden üblicherweise von einer hydraulischen Schaltung gesteuert, die hier nicht dargestellt ist. Der hydraulische Anschluß ist mit A bezeichnet. Beim Aufnehmen einer Last wird Druckmittel von A in den Hubzylinder Z5 eingespeist, und es kommt zu einem deutlichen Druckanstieg in dem Augenblick, in dem das Lasttragmittel die Last anhebt. Dadurch erhöht sich gleichzeitig die Last an der Vorderachse 10, so dass eine Einfederbewegung zu erwarten ist. Dieser Effekt wird dadurch abgemildert oder ausgeglichen, dass über den Druckübersetzer DRÜ ein Druckanstieg im Hubzylinder Z5 zu einem Druckanstieg im hydraulischen Fahrwerkssystem führt, so dass die Einfederbewegung weitgehend vermieden ist. Werden bei Lastaufnahme die Ventile V4 und V5 vollständig gesperrt, wird über den Druckübersetzer DRÜ der Druck in den Hydrospeichern S2 und S3 so erhöht, dass bei einer späteren Freigabe der Federbewegungen die Druckstöße durch das Schalten des Ventils V5 minimiert werden.

Bei der Aufnahme einer Last wird naturgemäß die Hinterachse 12 entlastet. Durch die beschriebene Verbindung mit den Ringräumen der Hinterachszylinder Z3 und Z4 und den Zylinderräumen der Vorderachszylinder Z1, Z2 wird auch eine lastwechselbedingte Federbewegung der Hinterachse 12 vermieden. Es ist jedoch vorteilhaft, wenn die mechanischen Größen und geometrischen Bedingungen der Vorder- und Hinterachse so aufeinander abgestimmt sind, dass der durch die Lastaufnahme bedingte Druckanstieg im Federungssystem die Entlastung der Hinterachse 12 ausgleicht.

Wankbewegungen des Flurförderzeugs werden dadurch vermieden, dass zwischen den Hydrospeichern S2 und S3 im Betrieb keine hydraulische Verbindung besteht. Zu diesem Zweck sind die Kolben 32, 34 des Druckübersetzers DRÜ in nicht dargestellter Weise mechanisch miteinander verbunden, so dass beide Kolben 32, 34 gleiche Wege zurücklegen müssen. Die Funktion der Wankstabilisierung bleibt also erhalten, obwohl durch die Rückführung des Hubzylinders Z5 ein Ausgleich der Achslaständerung erfolgt.

Die Drosseln D 1 dämpfen am Hubzylinder erzeugte Schwingungen bei Fahrt des Flurförderzeugs über Bodenunebenheiten.

Durch geschickte Abstimmung der mechanischen Parameter der Achsaufhängungen sowie der Größen der hydraulischen Komponenten können Nachregelvorgänge durch die Pumpe P und Ventile V1 bis V3 während des üblichen Betriebs des Flurförderzeugs vollständig vermieden werden. Es kann daher auf die Pumpe P verzichtet werden, wenn für den Einregelvorgang eine andere im Flurförderzeug vorhandene Pumpe genutzt wird. Dadurch wird der Aufwand für das Fahrwerkssystem reduziert.

Durch eine Messung des hydraulischen Drucks an verschiedenen Stellen im dargestellten hydraulischen Federungssystems ist es möglich, die aktuellen Achs- oder Radlasten zu bestimmen. Mit Hilfe dieser Messungen kann der Fahrer bei Kippgefahr des Fahrzeugs gewarnt werden oder es können automatisch Maßnahmen gegen das Umkippen des Flurförderzeugs ergriffen werden.

Mit dem gezeigten Fahrwerkssystem ist es auch möglich, eine Neigung des Rahmens herbeizuführen, in dem gezielt den Zylindern Z1 und Z2 bzw. Z3 und Z4 Druckmittel entnommen bzw. zugeführt wird. Das Hubgerüst kann dann fest mit dem Fahrzeugrahmen verbunden und gleichwohl in gewünschter Weise geneigt werden.

## Patentansprüche

1. Vier-Rad-Fahrwerk für ein Flurförderzeug, vorzugsweise einen Gegengewichtsstapler, bei dem die Enden der Vorder- und Hinterachse bzw. die Räder gegenüber dem Fahrzeugrahmen über doppelt wirkende Hydraulikzylinder abgestützt sind, die ihrerseits mit Hydrospeichern zusammenwirken und ein hydraulisches Fahrwerkssystem bilden, wobei steuerbare erste Schaltventile die Hydrospeicher wahlweise von den Hydraulikzylindern trennen und wobei eine hydraulische Hubvorrichtung für ein Lasttragmittel vorgesehen ist, **dadurch gekennzeichnet, dass** ein hydraulisches System für die Hubvorrichtung (Z5) über einen Druckübersetzer (DRÜ) mit dem hydraulischen Fahrwerkssystem zusammenwirkt und der Druck im Fahrwerkssystem und damit eine Einfederbewegung in Abhängigkeit von der aufgenommenen Last verändert wird.

2. Vier-Rad-Fahrwerk nach Anspruch 1, **dadurch gekennzeichnet, dass** der Druckübersetzer (DRÜ) über ein zweites Schaltventil (V5) mit den Zylinderräumen der Hydraulikzylinder (Z1 bis Z5) mindestens eine Achse (10, 12) vorzugsweise der lastnahen Achse (10) verbunden ist und der dazugehörige Hydrospeicher (S2, S3) an die Verbindung zwischen dem zweiten Schaltventil (V5) und dem Druckübersetzer (DRÜ) angeschlossen ist.

3. Vier-Rad-Fahrwerk nach Anspruch 2, **dadurch gekennzeichnet, dass** zwischen Druckübersetzer (DRÜ) und zweitem Schaltventil (V5) eine Drossel (D1) angeordnet ist.

4. Vier-Rad-Fahrwerk nach Anspruch 2 oder 3, **dadurch gekennzeichnet, dass** ein Hydrospeicher (S1) für die lastfeme Achse ebenfalls über ein erstes Schaltventil (V4) mit den Hydraulikzylindern (Z3, Z4) dieser Achse (12) verbunden ist.

5. Vier-Rad-Fahrwerk nach einem der Ansprüche 2 bis 4, **dadurch gekennzeichnet, dass** der Druckübersetzer (DRÜ) über zwei Zweige mit den zwei parallelen Zweigen (16, 18) des hydraulischen Fahrwerkssystems verbunden ist und die Zweige des Druckübersetzers (DRÜ) eine Zwangskopplung aufweisen dergestalt, dass ein Druckausgleich zwischen den Hydrospeichern (S2, S3) über den Hubzylinder (Z5) vermieden ist.

6. Vier-Rad-Fahrwerk nach einem der Ansprüche 1 bis 5, **dadurch gekennzeichnet, dass** der Druckübersetzer (DRÜ) über zwei Zweige mit parallelen Zweigen des hydraulischen Fahrwerkssystems verbunden ist und jedem Zweig ein Hydrospeicher (S2, S3) zugeordnet ist.

7. Vier-Rad-Fahrwerk nach einem der Ansprüche 1 bis 6, **dadurch gekennzeichnet, dass** die Hydrospeicher (S1 bis, S3) über eine Parallelschaltung eines Rückschlagventils und einer steuerbaren Drossel (D2 bis D4) mit dem hydraulischen Fahrwerkssystem verbunden sind.

8. Vier-Rad-Fahrwerk nach Anspruch 7, **dadurch gekennzeichnet, dass** die Drosseln (D2 bis D4) in Abhängigkeit von der Fahrgeschwindigkeit und/oder der Fahrbahnbeschaffenheit und/oder der aufgenommenen Last veränderbar sind.

9. Vier-Rad-Fahrwerk nach einem der Ansprüche 1 bis 8, **dadurch gekennzeichnet, dass** die mechanischen Größen und geometrischen Bedingungen der lastnahen und der lastfemen Achse (10, 12) so abgestimmt sind, dass der durch die Lastaufnahme bedingte Druckanstieg die Entlastung der lastfernem Achse (12) ausgleicht.

10. Vier-Rad-Fahrwerk nach einem der Ansprüche 1 bis 9, **dadurch gekennzeichnet, dass** die Zylinderräume der Hydraulikzylinder (Z1, Z2) der lastnahen Achse (10) kreuzweise miteinander verbunden sind und die Kolbenräume der Hydraulikzylinder (Z1, Z2) der lastnahen Achse (10) mit den Ringräumen der Hydraulikzylinder (Z3, Z4) der lastfernen Achse (12) verbunden sind.

11. Vier-Rad-Fahrwerk nach Anspruch 10, **dadurch gekennzeichnet, dass** eine Hydropumpe (P) über einen Stromteiler (ST) mit den kreuzenden Zweigen (16, 18) des hydraulischen Fahrwerkssystems verbunden ist.

12. Vier-Rad Fahrwerk nach Anspruch 10 oder 11, **dadurch gekennzeichnet, dass** die Pumpe (P) über ein drittes Schaltventil (V1) wahlweise mit den Kolbenräumen der Hydraulikzylinder jeweils einer Achse (10, 12) verbunden ist.

13. Vier-Rad-Fahrwerk nach Anspruch 10 und 12, **dadurch gekennzeichnet, dass** zwischen dem dritten Schaltventil (V1) und den Kolbenräumen der Hydraulikzylinder der lastfemen Achse (12) ein viertes Schaltventil (V4) angeordnet ist, das zugleich in der Leitung eines Hydrospeichers (S1) für die lastfernen Hydraulikzylinder (Z3, Z4) angeordnet ist.

14. Vier-Rad-Fahrwerk nach einem der Ansprüche 1 bis 13, **dadurch gekennzeichnet, dass** eine Druckmeßvorrichtung vorgesehen ist, die an mindestens einer Stelle des hydraulischen Fahrwerkssystems den Druck mißt zur Bestimmung der Rad- oder Achslast an einer oder beiden Achsen (10, 12).

15. Vier-Rad-Fahrwerk nach einem der Ansprüche 1 bis 14, **dadurch gekennzeichnet, dass** ein Hubgerüst für ein höhenbewegliches Lasttragmittel fest mit dem Rahmen des Flurförderzeugs verbunden ist.

16. Vier-Rad-Fahrwerk nach einem der Ansprüche 1 bis 15, **dadurch gekennzeichnet, dass** den Achsen (10, 12) bzw. den Rädern (14) eine Sensorik zugeordnet ist, die die Höhe des Rahmens des Fahrzeugs relativ zum Untergrund bestimmt und die mit einer Steuervorrichtung verbunden ist, welche einen Antrieb für die Hydraulikpumpe (P) und eine zugehörige Ventilanordnung ansteuert, bis die gewünschte Höhe an beiden Achsen (10, 12) erreicht ist.

17. Vier-Rad-Fahrwerk nach Anspruch 2 oder 4, **dadurch gekennzeichnet, dass** die Schaltventile (V4, V5) für die Hydrospeicher (S1 bis S3) zu Absperrzwecken in Abhängigkeit von Betriebsparametern des Flurförderzeugs angesteuert werden, wie Fahrgeschwindigkeit, Hubhöhe des Lasttragmittels usw..

18. Vier-Rad-Fahrwerk nach einem der Ansprüche 1 bis 17, **dadurch gekennzeichnet, dass** Mittel zum separatem Einspeisen oder Ablassen eines Druckmittels für die Hydraulikzylinder (Z1 bis Z4) vorgesehen sind, wodurch die Neigung des Flurförderzeugs um eine Querachse veränderbar ist.

## Claims

1. A four wheel chassis for a floor conveyor, a counterweight stacker in particular, in which the ends of the front and rear axle or the wheels, respectively, are supported with respect to the vehicle frame via double-acting hydraulic cylinders, which on their turn co-operate with hydraulic accumulators and constitute a hydraulic chassis system, wherein first controllable on-off valves separate the hydraulic accumulators from the hydraulic cylinders at option, and wherein a hydraulic lifting equipment for a load supporting means is provided, **characterised in that** a hydraulic system for the lifting equipment (Z5) co-operates with the hydraulic chassis system via a pressure intensifier (DRÜ), and the pressure in the chassis system and with this a compression movement is changed as a function of the taken-up load.

2. A four wheel chassis according to claim 1, **characterised in that** the pressure intensifier (DRÜ) is connected with the cylinder chambers of the hydraulic cylinders (Z1 to Z5) of at least one axle (10, 12), the axle near the load (10) preferably, via a second on-off vale (V5), and the hydraulic accumulator (S2, S3) belonging to it is connected to the connection between the second on-off valve (V5) and the pressure intensifier (DRÜ).

3. A four wheel chassis according to claim 2, **characterised in that** a throttle (D1) is arranged between the pressure intensifier (DRÜ) and the second on-off valve (V5).

4. A four wheel chassis according to claim 2 or 3, **characterised in that** a hydraulic accumulator (S1) for the axle farther from the load is also connected with the hydraulic cylinders (Z3, Z4) of this axle (12) via a first on-off valve (V4).

5. A four wheel chassis according to any one of claims 2 to 4, **characterised in that** the pressure intensifier (DRÜ) is connected with the two parallel branches (16, 18) of the hydraulic chassis system via two branches, and the branches of the pressure intensifier (DRÜ) have a compulsory coupling such that a pressure compensation between the hydraulic accumulators (S2, S3) via the lifting cylinder (Z5) is avoided.

6. A four wheel chassis according to any one of claims 1 to 5, **characterised in that** the pressure intensifier (DRÜ) is connected with parallel branches of the hydraulic chassis system via two branches, and each one hydraulic accumulator (S2, S3) is assigned to each one of these branches.

7. A four wheel chassis according to any one of claims 1 to 6, **characterised in that** the hydraulic accumulators (S1 to S3) are connected with the hydraulic chassis system via a parallel circuit of a check valve and a controllable throttle (D2 to D4).

8. A four wheel chassis according to claim 7, **characterised in that** the throttles (D2 to D4) are changeable as a function of the road speed and/or the road condition and/or the load which is taken up.

9. A four wheel chassis according to any one of claims 1 to 8, **characterised in that** the mechanical parameters and geometric conditions of the axle near the load and of that farther from the load (10, 12) are coordinated such that the pressure increase caused by taking up the load compensates the relief of the axle (12) farther to the load.

10. A four wheel chassis according to any one of claims 1 to 9, **characterised in that** the cylinder chambers of the hydraulic cylinders (Z1, Z2) of the axle (10) near the load are crosswise connected with each other and the delivery chambers of the hydraulic cylinders (Z1, Z2) of the axle (10) near the load are connected with the rod-end chambers of the hydraulic cylinders (Z3, Z4) of the axle (12) farther from the load.

11. A four wheel chassis according to claim 10, **characterised in that** a fluid power pump (P) is connected with the crossing branches (16, 18) of the hydraulic chassis system via a flow divider (ST).

12. A four wheel chassis according to claim 10 or 11, **characterised in that** the pump (P) is optionally connected with the delivery chambers of the hydraulic cylinders of one axis (10, 12) at a time via a third on-off valve (V1).

13. A four wheel chassis according to claim 10 and 12, **characterised in that** a fourth on-off valve (V4) is arranged between the third on-off valve (V1) and the delivery chambers of the hydraulic cylinders of the axle (12) farther from the load, which is simultaneously arranged in the line of a hydraulic accumulator (S1) for the hydraulic cylinders (Z3, Z4) farther from the load.

14. A four wheel chassis according to any one of claims 1 to 13, **characterised in that** a pressure measuring equipment is provided, which measures the pressure on at least one position of the hydraulic chassis system, in order to determine the wheel- or axle load at one or both axles (10, 12).

15. A four wheel chassis according to any one of claims 1 to 14, **characterised in that** a lifting scaffold for a height-movable load supporting means is fixedly connected with the frame of the floor conveyor.

16. A four wheel chassis according to any one of claims 1 to 15, **characterised in that** a sensory analysis system is assigned to the axles (10, 12) or the wheels (14), respectively, which determines the height of the frame of the vehicle with respect to the ground and which is connected with a control device which triggers a drive for the fluid power pump (P) and a valve arrangement belonging to it, until the desired height is reached on both axles (10, 12).

17. A four wheel chassis according to claim 2 or 4, **characterised in that** the on-off valves (V4, V5) for the hydraulic accumulator (S1 to S3) are triggered for purposes to turn off as a function of operation parameters of the floor conveyor, such as road speed, lifting height of the load supporting means and so forth.

18. A four wheel chassis according to any one of claims 1 to 17, **characterised in that** means for separately feeding or discharging a fluid power medium for the hydraulic cylinders (Z1 to Z4) are provided, through which the inclination of the floor conveyor around a transverse axis is changeable.

## Revendications

1. Châssis à quatre roues pour un chariot de manutention, de préférence pour un chariot élévateur à contrepoids, dans lequel les extrémités des essieux avant et arrière ou respectivement les roues sont supportés par rapport au cadre du véhicule par des cylindres hydrauliques à double action, qui de leur part coopèrent avec des accumulateurs hydrauliques et forment un système de châssis hydraulique, dans lequel premières soupapes de réglage contrôlables séparent à choix les accumulateurs hydrauliques des cylindres hydrauliques et dans lequel est pourvu un dispositif de levage pour un dispositif porte-charges, **caractérisé en ce que** un système hydraulique pour le dispositif de levage (Z5) coopère avec le système de châssis hydraulique au travers d'un dispositif multiplicateur de pression (DRÜ), et la pression dans le système de châssis et par cela un mouvement de débattement est changé en fonction de la charge ramassée.

2. Châssis à quatre roues selon la revendication 1, **caractérisé en ce que** le dispositif multiplicateur de pression (DRÜ) est raccordé au travers d'une deuxième soupape de réglage (V5) aux chambres de cylindre des cylindres hydrauliques (Z1 à Z5) d'au moins un essieu (10, 12), de préférence de l'essieu près de la charge (10), et l'accumulateur hydraulique associé (S2, S3) est branché à la jonction entre la deuxième soupape de réglage (V5) et le dispositif multiplicateur de pression (DRÜ).

3. Châssis à quatre roues selon la revendication 2, **caractérisé en ce que** un étranglement (D1) est disposée entre le dispositif multiplicateur de pression (DRÜ) et la deuxième soupape de réglage (V5).

4. Châssis à quatre roues selon la revendication 2 ou 3, **caractérisé en ce que** un accumulateur hydraulique (S1) pour l'essieu loin de la charge est aussi raccordé aux cylindres hydrauliques (Z3, Z4) de cet essieu (12) au travers d'une première soupape de réglage (V4).

5. Châssis à quatre roues selon l'une quelconque des revendications 2 à 4, **caractérisé en ce que** le dispositif multiplicateur de pression (DRÜ) est raccordé aux deux branches parallèles (16, 18) du système de châssis hydraulique au travers de deux branches, et les branches du dispositif multiplicateur de pression (DRÜ) présentent un couplage forcé de sorte que une compensation de pression entre les accumulateurs hydrauliques (S2, S3) au travers du cylindre de levage (Z5) soit évitée.

6. Châssis à quatre roues selon l'une quelconque des revendications 1 à 5, **caractérisé en ce que** le dispositif multiplicateur de pression (DRÜ) est raccordé à des branches parallèles du système de châssis hydraulique au travers de deux branches, et un accumulateur hydraulique (S2, S3) est associé à chaque branche.

7. Châssis à quatre roues selon l'une quelconque des revendications 1 à 6, **caractérisé en ce que** les accumulateurs hydrauliques (S1 à S3) sont raccordés au système de châssis hydraulique au travers d'un couplage parallèle d'une soupape à non-retour et un étranglement réglable (D2 à D4).

8. Châssis à quatre roues selon la revendication 7, **caractérisé en ce que** les étranglements (D2 à D4) sont altérables en fonction de la vitesse de marche et/ou de la charge ramassée.

9. Châssis à quatre roues selon l'une quelconque des revendications 1 à 8, **caractérisé en ce que** les dimensions mécaniques et les conditions géométriques des essieux près et loin de la charge (10, 12) sont ajustés de sorte que l'accroissement de pression causé par la prise de charge contrebalance la réduction de charge de l'essieu loin de la charge (12).

10. Châssis à quatre roues selon l'une quelconque des revendications 1 à 9, **caractérisé en ce que** les chambres de cylindre des cylindres hydrauliques (Z1, Z2) de l'essieu près de la charge (10) sont raccordées l'une à l'autre en croix, et les chambres de piston des cylindres hydrauliques (Z1, Z2) de l'essieu près de la charge (10) sont raccordées aux espaces annulaires des cylindres hydrauliques de l'essieu loin de la charge (12).

11. Châssis à quatre roues selon la revendication 10, **caractérisé en ce que** une pompe hydraulique (P) est raccordée aux branches en croix (16, 18) du système de châssis hydraulique au travers d'un diviseur d'écoulement (ST).

12. Châssis à quatre roues selon la revendication 10 ou 11, **caractérisé en ce que** la pompe (P) est raccordée par choix aux chambres de piston des cylindres hydrauliques d'un seul essieu (10, 12) à chaque fois au travers d'une troisième soupape de réglage (V1).

13. Châssis à quatre roues selon la revendication 10 et 12, **caractérisé en ce que** une quatrième soupape de réglage (V4) est disposée entre la troisième soupape de réglage (V1) et les chambres de piston des cylindres hydrauliques de l'essieu loin de la charge (12), qui est au même temps disposé dans le conduit d'un accumulateur hydraulique (S1) pour les cylindres hydrauliques (Z3, Z4) loin de la charge.

14. Châssis à quatre roues selon l'une quelconque des revendications 1 à 13, **caractérisé en ce que** un contrôleur de pression est pourvu qui mesure la pression dans au moins un endroit du système de châssis hydraulique afin de déterminer la charge de roue ou d'essieu dans une seule ou les deux essieux (10, 12).

15. Châssis à quatre roues selon l'une quelconque des revendications 1 à 14, **caractérisé en ce que** une structure de levage pour un dispositif porte-charges mobile en hauteur est fixement connecté au châssis-cadre du chariot de manutention.

16. Châssis à quatre roues selon l'une quelconque des revendications 1 à 15, **caractérisé en ce que** un système de capteurs est associé aux essieux (10, 12) ou roues (14) respectivement, qui détermine la hauteur du châssis-cadre du véhicule par rapport au sous-sol et qui est raccordé à un dispositif de contrôle qui commande un entraînement pour la pompe hydraulique (P) et un arrangement de soupapes associé, jusqu'à ce que la hauteur souhaitée est atteinte sur les deux essieux (10, 12).

17. Châssis à quatre roues selon la revendication 2 ou 4, **caractérisé en ce que** les soupapes de réglage (V4, V5) pour les accumulateurs hydrauliques (S1 à S3) sont commandées pour des raisons de disjonction en fonction de paramètres d'opération du chariot de manutention, comme la vitesse de marche, hauteur de levage du dispositif porte-charges etc.

18. Châssis à quatre roues selon l'une quelconque des revendications 1 à 17, **caractérisé en ce que** des moyens sont pourvus pour l'alimentation ou décharge séparée d'un moyen de pression pour les cylindres hydrauliques (Z1 à Z4), grâce à quoi l'inclinaison du chariot de manutention autour d'un axe transversal peut être changée.
